(19) Europäisches Patentamt
European Patent Office
Office européen des brevets

(11) **EP 2 741 404 B1**

(12) **EUROPEAN PATENT SPECIFICATION**

(45) Date of publication and mention
of the grant of the patent:
**02.05.2018 Bulletin 2018/18**

(21) Application number: **11870803.1**

(22) Date of filing: **31.08.2011**

(51) Int Cl.:
***H02K 21/16*** *(2006.01)*      ***H02K 1/27*** *(2006.01)*

(86) International application number:
**PCT/CN2011/079169**

(87) International publication number:
**WO 2013/020314 (14.02.2013 Gazette 2013/07)**

(54) **PERMANENT MAGNET SYNCHRONOUS ELECTRIC MACHINE**

ELEKTRISCHE PERMANENTMAGNET-SYNCHRONMASCHINE

MACHINE ÉLECTRIQUE SYNCHRONE À AIMANTS PERMANENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2011 CN 201110223492**

(43) Date of publication of application:
**11.06.2014 Bulletin 2014/24**

(73) Proprietors:
- **Gree Electric Appliances, Inc.of Zhuhai**
  **Zhuhai, Guangdong 519070 (CN)**
- **Gree Green Refrigeration Technology Center
  Co.,Ltd**
  **Zhuhai, Guangdong 519070 (CN)**

(72) Inventors:
- **HUANG, Hui**
  **Zhuhai**
  **Guangdong 519070 (CN)**
- **HU, Yusheng**
  **Zhuhai**
  **Guangdong 519070 (CN)**
- **CHEN, Dongsuo**
  **Zhuhai**
  **Guangdong 519070 (CN)**
- **CHEN, Huajie**
  **Zhuhai**
  **Guangdong 519070 (CN)**
- **XIAO, Yong**
  **Zhuhai**
  **Guangdong 519070 (CN)**
- **ZENG, Xueying**
  **Zhuhai**
  **Guangdong 519070 (CN)**
- **ZHANG, Wenming**
  **Zhuhai**
  **Guangdong 519070 (CN)**

(74) Representative: **Stiebe, Lars Magnus et al
Balder**
**Paseo de la Castellana 93, 5
28046 Madrid (ES)**

(56) References cited:
**EP-A1- 2 738 923**      **CN-U- 202 145 611**
**JP-A- 9 233 744**      **JP-A- 9 308 198**
**JP-A- H11 262 205**      **JP-A- 2011 083 066**

**Description**

TECHNICAL FIELD

The present disclosure relates to a permanent magnet synchronous motor.

BACKGROUND OF THE INVENTION

The permanent magnet synchronous motor comprises a stator and a rotor. The rotor is provided thereon with magnetic steel slots and permanent magnets are provided in the magnetic steel slots. During operation, the rotor is driven to rotate by permanent magnetic torque and reluctance torque, as illustrated by the following formula:

$$\mathrm{T} = mp(L_q - L_d)i_d i_q + mp\Psi_{PM}i_q$$

Wherein, the first term $mp(L_q - L_d)i_d i_q$ is the reluctance torque; the second term $mp\Psi_{PM}i_q$ is the permanent magnetic torque; $\Psi_{PM}$ is the maximum of the stator-rotor coupling flux generated by the permanent magnet; m is the number of the phases of the stator winding, $p$ is the number of pole-pairs of the motor; $L_d$ and $L_q$ are respectively the d-axis inductance and the q-axis inductance; $i_d$ and $i_q$ are respectively the armature current component along the d-axis and the armature current component along the q-axis.

In practical use, the stator of the permanent magnet synchronous motor is provided with a plurality of stator teeth to form a plurality of magnetic channels in the rotor, and magnetic fields are generated between the stator and the rotor, especially between the stator teeth and the respective magnetic channels, and further generate torque to drive the rotor to rotate and make full use of the reluctance torque. However, according to the structure of the permanent magnet synchronous motor in the prior art, the relationship between the stator teeth and the magnetic channels is at random. The relationship between the stator teeth and the magnetic channels determines the distribution of the magnetic flux lines, and further determines the permanent magnetic torque, therefore, the prior art structure will cause instability of the output torque of the permanent magnet synchronous motor, thereby generating louder noise and greater vibration.

SUMMARY OF THE INVENTION

In view of the defects existing in the prior art mentioned above, the present invention provides a permanent magnet synchronous motor which can achieve more stable output torque, and reduce the noise and vibration in operation.

The technical scheme of the present disclosure is as follows:

A permanent magnet synchronous motor comprises a stator and a rotor; wherein a plurality of wire slots are circumferentially distributed on the stator; wire slots are provided therein with coils; a stator tooth is provided between every two adjacent wire slots; a plurality of sets of magnet slots are circumferentially distributed in the rotor; each set of magnet slots comprises at least two magnetic steel slots; a permanent magnet is provided in each magnetic steel slot; a magnetic channel is formed between every two adjacent magnetic steel slots; and of every two adjacent magnetic channels not formed between two adjacent sets of magnet slots, centers of the ends of one magnetic channel correspond to the wire slots, and centers of the ends of the other magnetic channel correspond to the stator teeth.

Preferably, two ends of each magnetic channel both correspond to the wire slots simultaneously, or both correspond to the stator teeth simultaneously.

Preferably, the magnet steel slots are arc-shaped slots or U-shaped slots facing outwards along a radial direction.

Preferably, there is a clearance between each of two ends of each permanent magnet and its corresponding magnet steel slot.

Preferably, the permanent magnet is flat-shaped or arc-shaped.

Preferably, the permanent magnet is arc-shaped, and gradually gets smaller in thickness towards its two ends.

The advantages or principles of the present invention will be described as follows:

1. The present disclosure changes the random relationship between the stator teeth and the magnetic channels, and the relationship between the stator teeth and the magnetic channels is defined strictly. Of every two adjacent magnetic channels, ends of one magnetic channel correspond to the wire slots, and ends of the other magnetic channel correspond to the stator teeth. In operation, along with the rotation of the rotor, ends of one of every two adjacent magnetic channels, which correspond to the wire slots first, rotate to positions facing the stator teeth; and ends of the other magnetic channel, which correspond to the stator teeth first, rotate to positions facing the wire slots. That is to say, the permanent magnet synchronous motor will not bring about sharp change of the output torque due to the rotation of the rotor, which will increase the stability of the output torque of the permanent magnet synchronous motor, and reduce the noise and vibration of the permanent magnet synchronous motor.

2. There is a clearance between each of two ends of each permanent magnet and its corresponding magnet steel slot, which can prevent two ends of the permanent magnet from being demagnetized and avoid damaging the permanent magnet in assembling.

3. Each of the permanent magnets gradually gets smaller in thickness towards its two ends, which can not only prevent the permanent magnet from being demagnetized but also prevent the permanent magnet from sliding in the magnet slot.

BRIEF DESCRIPTION OF THE DRAWINGS

Fig. 1 is a sectional view of the permanent magnet synchronous motor according to the first embodiment of the present invention;
Fig. 2 is a partial enlarged view of Fig.1;
in which, the elements are denoted as follows:

| | | | | |
|---|---|---|---|---|
| 1. stator | 2. rotor | 3. wire slot | 4.coil | 5. stator tooth |
| 6.set of magnet slots | 7. magnetic steel slot | | | 8. permanent magnet |
| 9. magnetic channel | | | | |

DETAILED DESCRIPTION OF THE PREFERRED EMBODIMENTS

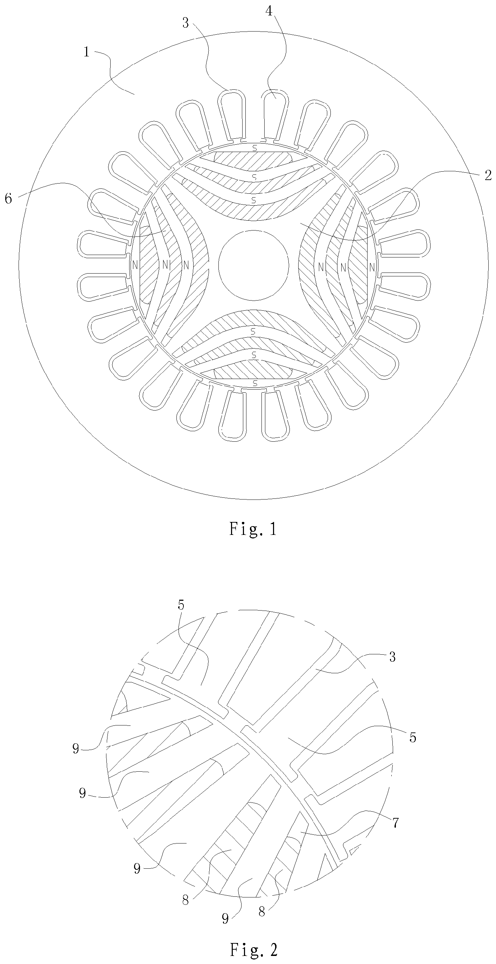

The embodiments of the present invention will be described in details as follows:
As shown in Figs. 1 and 2, the permanent magnet synchronous motor comprises a stator 1 and a rotor 2. A plurality of wire slots 3 are circumferentially distributed on the stator 1, and wire slots 3 are provided therein with coils 4. A stator tooth is provided between every two adjacent wire slots 3. A plurality of sets of magnet slots 6are circumferentially distributed in the rotor 2, and each set of magnet slots 6 comprises at least two magnetic steel slots 7. Each magnetic steel slot 7 is provided therein with a permanent magnet 8. A magnetic channel 9 is formed between every two adjacent magnetic steel slots 7. Of every two adjacent magnetic channels 9, ends of one magnetic channel 9 correspond to the wire slots 3, and ends of the other magnetic channel 9 correspond to the stator teeth 5.
The permanent magnets 8 are classified into two categories: N pole permanent magnet and S pole permanent magnet. The permanent magnets 8 in the same set of magnet slot 6 have the same magnetic polarity, and adjacent sets of the permanent magnets 8 have opposite magnetic polarities, i.e., N-pole magnet and S-pole magnet are alternating. Two ends of each magnetic channel 9 both correspond to the wire slots 3 simultaneously, or both correspond to the stator teeth 5 simultaneously. Specifically, of every two adjacent magnetic channels 9, ends of one magnetic channel 9 correspond to the centers of the wire slots 3, and ends of the other magnetic channel 9 correspond to the centers of the stator teeth 5. The magnetic channel 9 is also formed between every two adjacent sets of magnet slots 6.
The magnet steel slot 7 is an arc-shaped slot facing outwards along the radial direction. The permanent magnet 8 is also arc-shaped, and gradually gets smaller in thickness towards its two ends. There is a clearance between each of the two ends of each permanent magnet 8 and its corresponding magnet steel slot 7.
The advantages or principles of the present invention will be described as follows:

1. The present disclosure changes the random relationship between the stator teeth 5 and the magnetic channels 9, and the relationship between the stator teeth 5 and the magnetic channels 9 is defined strictly. Of every two adjacent magnetic channels 9, ends of one magnetic channel 9 correspond to the wire slots 3, and ends of the other magnetic channel 9 correspond to the stator teeth 5. In operation, along with the rotation of the rotor 2, ends of one of every two adjacent magnetic channels 9, which correspond to the wire slots 3 first, rotate to positions facing the stator teeth 5; and ends of the other magnetic channel 9, which correspond to the stator teeth 5 first, rotate to positions facing the wire slots 3. That is to say, the permanent magnet synchronous motor will not bring about sharp change of the output torque due to the rotation of the rotor 2, which will increase the stability of the output torque of the permanent magnet synchronous motor, and reduce the noise and vibration of the permanent magnet synchronous motor.

2. There is a clearance between each of two ends of each permanent magnet 8 and its corresponding magnet steel slot, which can prevent two ends of the permanent magnet 8 from being demagnetized and avoid damaging the permanent magnet 8 in assembling.

3. Each of the permanent magnets 8 gradually gets smaller in thickness towards its two ends, which can not only prevent the permanent magnet 8 from being demagnetized but also prevent the permanent magnet 8 from sliding in the magnet slot.

The preferred embodiments described above are not restricted. It will be understood by those skilled in the art that various replacements and improvements based on the thoughts of the present disclosure may be made therein without departing from the scope of the disclosure.

**Claims**

1.   A permanent magnet synchronous motor, comprising a stator (1) and a rotor (2), wherein:

> a plurality of wire slots (3) are circumferentially distributed on the stator (1);
> wire slots (3) are provided therein with coils (4);
> a stator tooth (5) is provided between every two adjacent wire slots (3);
> a plurality of sets of magnet slots (6) are circumferentially distributed in the rotor (2);
> each set of magnet slots (6) comprises at least two magnetic steel slots (7);
> a permanent magnet (8) is provided in each magnetic steel slot (7);
> a magnetic channel (9) is formed between every two adjacent magnetic steel slots (7);

> **characterized in that**

> of every two adjacent magnetic channels (9) not formed between two adjacent sets of magnet slots (6),
> centers of the ends of one magnetic channel (9) face centers of the wire slots (3), and
> centers of the ends of the other magnetic channel (9) face centers of the stator teeth (5).

2.   The permanent magnet synchronous motor according to claim 1, wherein two ends of each magnetic channel (9) both correspond to the wire slots (3) simultaneously, or both correspond to the stator teeth (5) simultaneously.

3.   The permanent magnet synchronous motor according to any of claims 1-2, wherein the magnet steel slots (6) are arc-shaped slots or U-shaped slots facing outwards along a radial direction.

4.   The permanent magnet synchronous motor according to any of claims 1-3, wherein there is a clearance between each of two ends of each permanent magnet (8) and its corresponding magnet steel slot (6).

5.   The permanent magnet synchronous motor according to any of claims 1-4, wherein the permanent magnet (8) is flat-shaped.

6.   The permanent magnet synchronous motor according to any of claims 1-4, wherein the permanent magnet (8) is arc-shaped.

7.   The permanent magnet synchronous motor according to claim 6, wherein the permanent magnet (8) gradually gets smaller in thickness towards its two ends.

**Patentansprüche**

1.   Ein Permanentmagnet-Synchronmotor, umfassend einen Stator (1) und einen Rotor (2), wobei:

> eine Mehrzahl an Verdrahtungsaussparungen (3) umlaufend auf dem Stator (1) verteilt sind;
> die Verdrahtungsaussparungen (3) darin mit Spulen (4) versehen sind;
> ein Statorzahn (5) zwischen jeden zwei benachbarten Verdrahtungsaussparungen (3) vorhanden ist;
> eine Mehrzahl an Sätzen von Magnetaussparungen (6) umlaufend in dem Rotor (2) verteilt sind;
> jeder Satz an Magnetaussparungen (6) wenigstens zwei magnetische Stahlaussparungen (7) umfasst;
> ein Permanentmagnet (8) in jeder magnetischen Stahlaussparung (7) vorhanden ist;
> ein magnetischer Kanal zwischen jeden zwei benachbarten magnetischen Stahlaussparungen (7) ausgebildet ist;
> **dadurch gekennzeichnet, dass**
> in jeden zwei benachbarten magnetischen Kanälen (9) die nicht zwischen zwei benachbarten Sätzen an magnetischen Aussparungen (6) ausgebildet sind, Zentren der Enden von einem magnetischen Kanal (9) Zentren der Verdrahtungsaussparungen (3) gegenüberstehen, und Zentren der Enden des anderen magnetischen Kanals (9) Zentren des Statorzahns (5) gegenüberstehen.

**2.** Der Permanentmagnet-Synchronmotor gemäß Anspruch 1, wobei zwei Enden von jedem magnetischen Kanal (9) beide gleichzeitig mit den Verdrahtungsaussparungen (3) korrespondieren, oder beide gleichzeitig mit dem Statorzahn (5) korrespondieren.

**3.** Der Permanentmagnet-Synchronmotor gemäß einem der Ansprüche 1 bis 2, wobei die magnetischen Stahlaussparungen (6) bogenförmige Aussparungen oder U-förmige Aussparungen sind, die entlang einer radialen Richtung nach Außen zeigen.

**4.** Der Permanentmagnet-Synchronmotor gemäß einem der Ansprüche 1 bis 3, wobei sich ein Abstand zwischen jedem der zwei Enden von jedem Permanentmagnet (8) und seiner entsprechenden magnetischen Stahlaussparung (6) befindet.

**5.** Der Permanentmagnet-Synchronmotor gemäß einem der Ansprüche 1 bis 4, wobei der Permanentmagnet (8) eine flache Form aufweist.

**6.** Der Permanentmagnet-Synchronmotor gemäß einem der Ansprüche 1 bis 4, wobei der Permanentmagnet (8) bogenförmig ist.

**7.** Der Permanentmagnet-Synchronmotor gemäß Anspruch 6, wobei der Permanentmagnet (8) allmählich zu seinen zwei Enden hin geringer in der Dicke wird.

**Revendications**

**1.** Moteur synchrone à aimant permanent, comprenant un stator (1) et un rotor (2), dans lequel :

une pluralité de fentes de fil (3) sont réparties de manière circonférentielle sur le stator (1) ;
les fentes de fil (3) sont prévues à l'intérieur de ces dernières, avec des bobines (4) ;
une dent de stator (5) est prévue toutes les deux fentes de fil (3) adjacentes ;
une pluralité d'ensembles de fentes d'aimant (6) sont réparties de manière circonférentielle dans le rotor (2) ;
chaque ensemble de fentes d'aimant (6) comprend au moins deux fentes en acier magnétique (7) ;
un aimant permanent (8) est prévu dans chaque fente en acier magnétique (7) ;
un canal magnétique (9) est formé toutes les deux fentes en acier magnétique (7) adjacentes ;
**caractérisé en ce que** :

parmi tous les deux canaux magnétiques (9) adjacents non formés entre deux ensembles adjacents des fentes d'aimant (6),
des centres des extrémités d'un canal magnétique (9) font face aux centres des fentes de fil (3), et
des centres des extrémités de l'autre canal magnétique (9) font face aux centres des dents de stator (5).

**2.** Moteur synchrone à aimant permanent selon la revendication 1, dans lequel deux extrémités de chaque canal magnétique (9) correspondent toutes deux aux fentes de fil (3) simultanément, ou bien correspondent toutes deux aux dents de stator (5) simultanément.

**3.** Moteur synchrone à aimant permanent selon l'une quelconque des revendications 1 à 2, dans lequel les fentes en acier magnétique (6) sont des fentes en forme d'arc ou des fentes en forme de U orientées vers l'extérieur le long d'une direction radiale.

**4.** Moteur synchrone à aimant permanent selon l'une quelconque des revendications 1 à 3, dans lequel il existe un jeu entre chacune des deux extrémités de chaque aimant permanent (8) et sa fente en acier magnétique (6) correspondante.

**5.** Moteur synchrone à aimant permanent selon l'une quelconque des revendications 1 à 4, dans lequel l'aimant permanent (8) est formé à plat.

6. Moteur synchrone à aimant permanent selon l'une quelconque des revendications 1 à 4, dans lequel l'aimant permanent (8) est en forme d'arc.

7. Moteur synchrone à aimant permanent selon la revendication 6, dans lequel l'aimant permanent (8) devient progressivement plus petit du point de la vue de l'épaisseur vers ses deux extrémités.

Fig. 1

Fig. 2